(19) **Europäisches Patentamt / European Patent Office / Office européen des brevets**

(11) **EP 1 740 646 B1**

(12) **EUROPEAN PATENT SPECIFICATION**

(45) Date of publication and mention
of the grant of the patent:
**16.03.2016 Bulletin 2016/11**

(21) Application number: **05736580.1**

(22) Date of filing: **19.04.2005**

(51) Int Cl.:
*C08J 3/28* (2006.01)     *A61C 19/00* (2006.01)

(86) International application number:
**PCT/EP2005/004263**

(87) International publication number:
**WO 2005/103121 (03.11.2005 Gazette 2005/44)**

(54) **METHOD FOR PHOTOCURING OF RESIN COMPOSITIONS**

VERFAHREN ZUR PHOTOHÄRTUNG VON HARZZUSAMMENSETZUNGEN

PROCEDE DE PHOTOPOLYMERISATION DE COMPOSITIONS DE RESINE

(84) Designated Contracting States:
**AT BE BG CH CY CZ DE DK EE ES FI FR GB GR HU IE IS IT LI LT LU MC NL PL PT RO SE SI SK TR**
Designated Extension States:
**BA HR MK YU**

(30) Priority: **26.04.2004 EP 04076230**

(43) Date of publication of application:
**10.01.2007 Bulletin 2007/02**

(73) Proprietor: **ACR III B.V.**
**1118BJ Schiphol (NL)**

(72) Inventors:
• **JANSEN, Johan, Franz, Gradus, Antonius**
  **NL-6165 AP Geleen (NL)**
• **WIENKE, Dietrich**
  **NL-6181 KV Elsloo (NL)**
• **HOUBEN, Erwin, Johannes, Elisabeth**
  **NL-6211 EB Maastricht (NL)**
• **VAN DE LAARSCHOT, Robert, Simon, Adriaan**
  **NL-7702 AB Dedemsvaart (NL)**

(74) Representative: **De Clercq & Partners et al**
**Edgard Gevaertdreef 10a**
**9830 Sint-Martens-Latem (BE)**

(56) References cited:
**US-A1- 2003 081 430**

• **"Produktkatalog - SmartLite PS"[Online] XP002296081 Retrieved from the Internet: URL:http://www.dentsply.de/docs/index_asp_ id~29725_domid~1042_sp~D_addlastid~0_m1~ 20 366_m2~20415_m3~20386_m4~29725_suma~.ht m> [retrieved on 2004-09-10]**
• **"Bluephase - Produktdossier"[Online] XP002296082 Retrieved from the Internet: URL:http://media.ivoclarvivadent.com/pdf/b inarydata_de/info/bluephase_dossier_d.pdf> [retrieved on 2004-09-10]**
• **"New improved 3M ESPE Elipar FreeLight 2"[Online] XP002296083 Retrieved from the Internet: URL:http://multimedia.mmm.com/mws/mediawe b server.dyn?9999993gslo9u1A9N1A999wqsL___ __ Z-> [retrieved on 2004-09-10]**
• **"3M ESPE Elipar FreeLight 2 LED-Polymerisationsgerät - Technisches Produktprofil"[Online] XP002296084 Retrieved from the Internet: URL:http://www.zahnheilkunde.de/beitragpdf /pdf_1848.pdf> [retrieved on 2004-09-10]**

## Description

The present invention relates to methods for (re)lining an object in which LED curing (i.e. curing by means of a Light Emitting Diode) of a curable resin composition is applied, which resin composition contains a photoinitiating system. The photoinitiating system will hereinafter also be referred to as PIS. Curable resin compositions, as meant herein, comprise curable resin components and, optionally, reactive diluents present therewith (the summed weight of resin components and reactive diluent being used as the basis for calculating the weight percentages of all other components), as well as all kinds of other components, including the PIS, and any other components and additives that are usually used in curable resin compositions. The present invention also relates to the use of LED curing in applications for the lining or relining of objects, and to objects containing a cured resin composition obtained by LED curing.

In the framework of the present invention (re)lining is understood to be the provision on the inside of a hollow object or system, such as a pipe system (for example a sewage system, an industrial pipeline system or a transport pipeline), a vessel or a tank and the like, of a suitable coating with a thickness of at least 2 mm, but usually more than 6 mm and even up to 30-40 mm. The coating layer generally has the object of contributing to the mechanical strength and ensuring the resistance of the hollow object or system to chemicals, corrosion, etc., as well as preventing leaks. It should be noted that when a hollow object or system is for the first time coated on the inside with a lining (also known as internal coating), this is referred to as lining. Each subsequent time a hollow object or system that is already internally lined is coated with an internal coating, this is called relining. The term (re)lining therefore refers to all situations where the lining is provided either for the first time or for any subsequent time.

LED curing of curable resin compositions (for use in coating applications) is known from papers presented at the 2003 Radtech Europe Exhibition & Conference for Radiation Curing (November 3-5, 2003, Berlin, Germany). See, for instance, K. Dake et al. (Conference proceedings, pages 135-140), "LED Curing versus Conventional UV Curing Systems: Property Comparisons of Acrylates and Epoxies", and S. B. Siegel, (Conference proceedings, pages 149-157), "The UV LED Curing - Advances in a New Technology".

These references, from well-informed authors in the field of curing of resin materials, teach the LED curing of UV-curable resin compositions, in particular for use in coating systems, adhesives and inks. According to these references the highest wavelength at which an absorption maximum of the photoinitiating system occurs (this wavelength, in nm, hereinafter will be referred to as $\lambda_{max\,PIS}$) is matched with the wavelength, in nm, at which the emission maximum of the LED occurs (which will hereinafter be referred to as $\lambda_{LED}$), or- if such matching of wavelengths is insufficient - measures are taken (by using suitable sensitizers) to ensure good matching of the said wavelengths. Accordingly, these references teach that curing results will be poor when the said wavelengths are not properly matched. None of these references provides any teaching or suggestion about curing of layers having a thickness that is substantially larger than the thickness of a coating, adhesive or ink layer (generally at most about 150 $\mu$m). Accordingly, these references do not teach or suggest the curing of objects having a thickness of, for instance, more than about 0.5 mm, such as would be suitable for applications in construction materials, for instance for (re)lining objects such as pipes, especially large diameter pipes. It should further be noted that Siegel et al. specifically teaches that LED arrays in which the wavelength at which the emission maximum occurs ($\lambda_{LED}$) is 415 nm or higher cannot be used for initiating the curing of curable resin compositions.

US2003/81430 describes a device for LED curing a dental composite. A specific photoinitiator system is not disclosed.

LEDs are considered to be relatively safe (in that the risk of eye damage is relatively low) due to the absence of radiation in the UV range. This is because the wavelength at which their emission maximum occurs is relatively high. However, according to the above cited references such safer LEDs are unknown for initiating the curing of curable resin compositions for structural applications.

Nevertheless, there has been a long-felt need in the field of (photo)curing of curable resin compositions to find safe and reliable methods for providing cured structural parts, i.e. parts and resin objects having a thickness of at least 0.5 mm, and having appropriate mechanical properties such as hardness and chemical resistance. Safety considerations also play a major role when curing a curable resin dissolved in a (co)polymerisable free monomer, i.e. in a reactive diluent. Reactive diluents generally are relatively volatile compounds that may be dangerous because of explosion risks at incidentally occurring high temperatures, and because of toxicity aspects during preparation of the cured materials.

The aforementioned problems have been overcome according to the present invention by providing a method for (re)lining an object in which LED curing (i.e. curing by means of a Light Emitting Diode) of a curable resin composition is applied, which resin composition contains a photoinitiating system wherein the highest wavelength at which an absorption maximum of the photoinitiating system occurs ($\lambda_{maxPIS}$) is at least 20 nm below, and at most 100 nm below, the wavelength at which the emission maximum of the LED occurs ($\lambda_{LED}$). Wavelengths are expressed in nm.

Hereinafter, any difference between $\lambda_{LED}$ and $\lambda_{max\,PIS}$ of 20nm or more will be referred to as a mismatch. In a formula, the mismatch (MM) can be represented as

$$MM = \lambda_{LED} - \lambda_{max\,PIS} \qquad \text{(in nm)} ; MM \geq 20 \text{ nm}.$$

The Light Emitting Diodes (LEDs) that can be used thus should have a mismatch between the wavelength at which the emission maximum of the LED occurs ($\lambda_{LED}$) and the highest wavelength at which an absorption maximum of the photoinitiating system occurs ($\lambda_{max\,PIS}$). It should be noted that the absorption spectrum of a PIS will generally exhibit various absorption intensity maxima, at different wavelengths, but that only the one at the highest wavelength is to be taken into account in determining the required mismatch according to the present invention.

Methods and equipment for determining the wavelength at which the emission maximum of a LED occurs and the highest wavelength at which an absorption maximum of the photoinitiating system occurs are well known to the skilled person. It should be noted, however, that the highest absorption maximum of the PIS will not necessarily be observed in the form of a clear single absorption peak, but may also be present in the absorption spectrum of the PIS in the form of a so-called shoulder on the right-hand (i.e. highest wavelength) side of a peak.

In the context of the present invention, the term LED is used for indicating either single LEDs (i.e. one Light Emitting Diode, having a specific wavelength at which an emission wavelength occurs, $\lambda_{LED}$) or arrays of LEDs (consisting of a number of single LEDs, which may be identical, each with the same $\lambda_{LED}$, or may be different, having different $\lambda_{LED}$'s in a range of wavelengths). In the latter case, the lowest wavelength at which, in the individual LEDs, the emission maximum occurs ($\lambda_{LED}$) is taken as the "wavelength at which the emission maximum occurs" for the array of LEDs.

The term mismatch as meant herein is applicable to LED arrays even when, for some of the individual light emitting diodes in the array, there is a match between the wavelength at which the emission maximum of the LED occurs and the highest wavelength at which an absorption maximum of the PIS occurs. For the purposes of the present invention, accordingly, in an LED array consisting of a number of individual LEDs, a mismatch between $\lambda_{LED}$ and $\lambda_{max\,PIS}$ is assumed to exist when at least 10% of the individual LEDs have a mismatch with $\lambda_{max\,PIS}$. The effect of the mismatch for an LED array is larger as the percentage of mismatching individual LEDs is higher. That is to say, the effect of a mismatch increases in the series 10%, 20%, 30%, 40% .....100% mismatching LEDs out of the total number of individual LEDs. For LED arrays the best results are achieved when 100% of the total number of individual LEDs have a mismatch with the PIS.

Surprisingly, the present inventors have found that excellent curing results of curable objects having a thickness of more than 0.5 mm, for instance 1 or 2 cm, and even up to about 20 cm or more, can be achieved - throughout the whole thickness of the cured object - that so far could not be achieved by photocuring within several minutes, e.g. within 5 to 10 minutes. These excellent results are achieved due to the mismatch between $\lambda_{LED}$ and $\lambda_{max\,PIS}$.

Curable resin compositions that can be used in the methods according to the invention can be selected from a very wide range of resin compositions, as will be explained hereinafter in more detail. Suffice it to mention here that the methods of the invention, in general terms, can be applied for the curing of resin compositions that are cationically curable, as well as for resin compositions that are radically curable. Of course, in each such case, it is important to make a proper selection of the photoinitiating system (optionally including a sensitizer) and the LED to be used, in accordance with the guidelines presented hereinafter.

Cationically curable resin compositions generally comprise curable resin components selected from the group consisting of resin components containing hydroxyl groups, epoxy groups or oxetane groups, or combinations thereof, and of vinylester resin components, and of vinylether resin components, or mixtures of any of the foregoing. Suitable examples of cationically curable resin compositions are described in Netherlands patent NL-1007205.

Radically curable resin compositions generally comprise resin components selected from the groups consisting of (i) homopolymerisable resin components containing one or more electron-poor reactive unsaturations; (ii) co-polymerisable resin components containing one or more electron-poor reactive unsaturations; and (iii) combinations of resin components consisting at least of a component containing at least two reactive unsaturations per molecule and a component containing at least two XH-groups per molecule, with XH representing a labile X-H bond and X not being O or C. Suitable examples of radically curable resin compositions from groups (i) and (ii) are described in, for instance, WO-00/07746. Suitable examples of radically curable resin compositions from group (iii) are described in, for instance, WO-88/020902, EP-A-0156493 or N. B. Cramer et al. in Macromol. 36, p. 7964-7969 (2003).

The photoinitiating systems that can be used in the context of the present invention can be chosen from the large group of PIS known to the skilled person. A vast number of suitable photoinitiating systems, can be found in, for instance, Volume 3 of "Chemistry and Technology of UV and EB Formulations", 2nd Edition, by K. Dietliker and J. V. Crivello (SITA Technology, London; 1998).

As meant herein, a photoinitiating system is any system that is capable of initiating curing upon irradiation. The PIS may consist of a photoinitiator as such, or may be a combination of a photoinitiator and a sensitizer, or may be a mixture of photoinitiators, optionally in combination with one or more sensitizers,

As mentioned before, in principle, two main types of photocuring are to be distinguished: cationic curing and radical curing. In the case of cationic curing, the curable resin composition contains a cationic photoinitiator and optionally a sensitizer. A sensitizer can be any compound which is capable of absorbing light at a certain wavelength (higher than that of the photoinitiator) and transferring the said absorbed energy to the photoinitiator, which normally absorbs light at a lower wavelength (than the sensitizer); the curing is then initiated by the photoinitiator itself.

Suitable cationic photoinitiators can be chosen from a long list of known compounds, consisting of, for example, diaryl iodonium salts such as diphenyl iodonium tetrafluoroborate, di-p-alkyloxyphenyl iodonium tetrakis pentafluorophenyl borate, and triarylsulphonium salts such as triaryl sulphonium hexafluoroarsenate.

Suitable sensitizers for cationic photoinitiating systems are, for example, phenothiazine, xanthones, thioxanthones, perylene and derivatives thereof.

For radical curing, too, a large number of photoinitiating systems can be used. Generally such radical curing PIS are divided into two classes: (i) Norrish Type I systems (i.e. causing $\alpha$-cleavage), optionally also comprising a sensitizer; and (ii) Norrish Type II systems (operating by means of electron transfer).

Suitable Norrish Type I photoinitiators can, for instance, be chosen from the group consisting of benzoin derivatives; benzil ketals such as 2,2-dimethoxy-2-phenylacetophenone, and dimethoxy acetophenone; $\alpha$-hydroxy alkylphenones such as 1-hydroxy-cyclohexylphenyl ketone, and 2-hydroxy-2-methyl-1-phenyl propanone; $\alpha$-aminoalkyl phenones such as 2-methyl-1-[4-(methylthio)phenyl]-2-morpholino-propan-2-one, and 2-benzyl-2-dimethylamino-1-(4-morpho)inophenyl)butan-1 -one; phosphorus containing compounds such as monoacyl phosphine oxides, for instance 2,4,6-trimethyl-benzoyl diphenyl phosphine oxide, and diacyl phosphine oxides, for instance di-(2,4,6-trimethylbenzoyl) phenyl phosphine oxide and di-(2,6-dimethoxy benzoyl)-2,4,4- trimethylpentyl phosphine oxide. Suitable sensitizers are for instance xanthones, thioxantones, benzophenones and derivatives thereof. Mixtures of these photoinitiators and/or sensitizers can also be used.

Suitable Norrish Type II systems are generally based on combinations of an aromatic ketone and a reducing compound. As aromatic ketones xanthones, thioxantones, benzophenones and derivatives thereof can be used. As reducing compounds alcohols, ethers and amines can suitably be employed. Suitable amines are, for instance, aromatic amines such as ethyl 4-dimethylamino benzoate, dimethylaniline and aliphatic amines such as N,N-dimethyl ethanol amine, N-methyl diethanol amine, triethanol amine. Generally, Norrish Type II systems do not require the use of an additional sensitizer.

It should be noted that cationic initiating systems generally also generate radicals, and that such radicals generated by cationic initiating systems also can be employed in radical curing.

Furthermore, all kinds of combinations of photoinitiators as well as photoinitiating systems can be used in the context of the present invention. For example, combining a cationic photoinitiating system with a Norrish Type II system can easily result in a very efficient photoinitiating system. The combination of diphenyl iodonium pentafluoroborate with ethyl 4-dimethylamino benzoate and isopropyl thioxanthone, for example, is a very good photoinitiating system, which can equally well be used for radical curing and for cationic curing according to the present invention.

It is particularly preferred for the photoinitiating systems used in the context of the present invention to be so-called photobleaching initiating systems. In such photobleaching systems, irradiation of the PIS leads to the formation of compounds, derived from radicals formed from the PIS, which have an absorption maximum at a lower wavelength than the original PIS, but are not active as photoinitiators themselves.

Preferably, in the methods according to the invention, $\lambda_{LED}$ is at least 420 nm. Even more preferably, with a view to lowering the risk of eye damage, etc., $\lambda_{LED}$ is at least 440 nm.

In the methods according to the present invention, it is particularly preferred that the wavelength difference between $\lambda_{LED}$ and $\lambda_{max\,PIS}$ (in nm) be at least 30 nm and at most 90 nm. More preferably, the wavelength difference between $\lambda_{LED}$ and $\lambda_{max\,PIS}$ (in nm) is at least 40 nm and at most 80 nm. Most preferably, the wavelength difference between $\lambda_{LED}$ and $\lambda_{max\,PIS}$ (in nm) is at least 50 nm and at most 70 nm.

Excellent results in curing according to the invention are being achieved when $\lambda_{max\,PIS}$ is in the range of between 350 and 420 nm. When $\lambda_{max\,PIS}$ is above 420 nm, the resin compositions are too prone to be subject to undesirable effects (e.g. premature curing under the influence of daylight; discoloration) when they are exposed to visible light before being cured. Accordingly, PISs having $\lambda_{max\,PIS}$ above 420 nm are not suitable for any kinds of structural applications, including applications in (re)lining. When $\lambda_{max\,PIS}$ is below 350 nm the hazards inherent to UV irradiation become more pronounced, and absorption by other components present in the resin, for instance fillers, is generally too high, so curing is much less efficient.

The photoinitiating system used in the methods of the present invention preferably contains a Norrish Type I photoinitiating system. Examples of Norrish Type I PIS are presented in the foregoing text. Most preferably, The photoinitiating system used in the methods of the present invention is a Norrish Type I photoinitiating system. From the group of Norrish Type I PIS, phosphorus-containing photoinitiating systems are most preferred. However, Norrish Type II PIS may also suitably be used. Phosphorus-containing photoinitiating Norrish Type I systems are most preferred.

The amount of PIS in the curable resin compositions to be used in the methods of the present invention may vary within a wide range, but is generally in the range of from 0.001 to 5 wt.%, preferably of from 0.05 to 3 wt.%, most preferably of from 0.1 to 1 wt.%. These weight percentages are calculated in respect of the total weight of the curable resin composition, but excluding fillers, etc. (in other words, the summed weight of resin components and reactive diluent is used as the basis for calculating weight percentages for all other components).

In the methods according to the invention for (re)lining an object in which LED curing of a curable resin composition is applied, the resin component of the curable resin composition is preferably selected from the groups consisting of

(a) cationically curable resin components, in particular resin components selected from the group consisting of resin components containing hydroxyl groups, epoxy groups or oxetane groups, or combinations thereof, and of vinylester resin components, and of vinylether resin components, or mixtures of any of the foregoing;
(b) radically curable resin components, in particular resin components selected from the groups consisting of

(i) homopolymerisable resin components containing one or more electron-poor reactive unsaturations; and
(ii) co-polymerisable resin components containing one or more electron-poor reactive unsaturations; and
(iii) combinations of resin components consisting at least of a component containing at least two reactive unsaturations per molecule and a component containing at least two XH groups per molecule, with XH representing a labile X-H bond and X not being O or C.

The resin component of the curable resin compositions as used in the methods of the present invention may have an average molecular weight within a wide range of molecular weights, but preferably has an average molecular weight in the range of from 500 to 10000 D (Dalton), more preferably of from 1000 to 5000 D, and most preferably of from 2500 to 4000 D.

It is particularly preferred that the resin component of the curable resin composition used contains one or more electron-poor reactive unsaturations. Reactive unsaturations hereinafter also are abbreviated as RUs. As meant in the present patent application, the term resin component accordingly represents any polymer having reactive unsaturations and also may include any reactive diluent present in the composition. The RUs present in the resin compositions used in the methods of the present invention are most preferably electron-poor RUs attached to the said polymer. Most preferably, these polymers containing RUs are polyesters (i.e. polymers containing multiple ester groups). Examples of such (unsaturated) polyester polymers are fumarate or maleate polyester resins. Usually such fumarate and maleate polyester resins also comprise a reactive diluent, such as, for instance, styrene or butanediol dimethacrylate (BDDMA). Other suitable reactive diluents may be chosen from the group consisting of vinyl toluene, α-methyl styrene, tert-butyl styrene, methyl methacrylate (MMA), hydroxyethyl methacrylate (HEMA), hydroxypropyl methacrylate (HPMA), vinyl ethers, vinyl esters, triethylene glycol dimethacrylate (TEGDMA), trimethylolpropane trimethacryate (TMPTMA), and phenoxyethyl methacrylate (PEMA).

The term (unsaturated) polyesters as used herein, however, also includes (meth)acrylates; usually such (meth)acrylate-functional resins also comprise a reactive diluent, a very suitable reactive diluent being BDDMA.

Suitable maleate or fumarate polyester resins that can be used in the resin composition as used in the methods according to the invention are polyesters obtained by the reaction of organic compounds that contain carboxyl and/or alcohol groups. At least one of the starting compounds contains unsaturated compounds. Examples are maleate resins, isophthalic acidic resins, isophthalic acid / neopentyl glycol resins, orthophthalic acidic resins, orthophthalic acidic / neopentyl glycol resins, terephthalic acidic resins, dicyclopentadiene resins (DCPD). Examples of commercially available resins belonging to this category of resins are the SYNOLITET™ resins and PALATAL™ resins of DSM Composite Resins (Schaffhausen, Switzerland).

Suitable (meth)acrylate resins, also known under the name epoxy (meth)acrylates, that can be used in the resin composition as used in the methods according to the invention are addition products of polyepoxides and unsaturated carboxylic acids, preferably acrylic acid and methacrylic acid. Suitable polyepoxides are epoxy novolak resins and in particular polyepoxides based on bisphenol A. A class of vinyl ester resins that is also suitable is formed by the esterification products of alkoxylated bisphenol A with (meth)acrylic acid. Examples of commercially available resins belonging to this category of resins are, for instance, the ATLAC™ resins of DSM Composite Resins (Schaffhausen, Switzerland). The preparation method of unsaturated polyester resins and (meth)acrylate-functional resins are known to the person skilled in the art, for example from the "Kunststoff-Handbuch band VIII: Polyester" (Vieweg und Goerden, ISBN 3-446-10108-2, 1973), part II, chapters 1 up to and including 3.

Suitable (meth)acrylate urethane resins can be obtained by reacting a polyfunctional isocyanate with a polyhydric alcohol and/or a polyvalent amine and with a hydroxyalkyl (meth)acrylate. Examples are known from US-A-3297745, US-A-3772404, US-A-4618658, GB-A-2217722, DE-A-3744390 and EP-A-534197. (Meth)acrylated acrylics, i.e. poly(meth)acrylates with one or more (meth)acrylate groups bound thereto as side chain(s), can also suitably be used.

Depending on the field of application in which the LED-cured resin compositions are to be used, the skilled person can easily determine - based on his general knowledge about resin properties - which type of resin is most fit for the said application.

The resin compositions used in the method for (re)lining an object according to the invention may also contain fillers and other additives that are suitable in resin compositions (such as low profile additives, release agents, etc.) for ensuring good handling and proper mechanical properties. Suitably, the resin composition comprises one or more fillers, which preferably are selected from the groups consisting of transparent fillers and translucent fillers. Transparent fillers and translucent fillers have at most a very low absorption of light falling onto the surface of the resin composition; accordingly, their transmission values are high.

Suitable fillers for the resin composition that can be used in the methods according to the invention are for example aluminium trihydrate, calcium carbonate, mica, microcrystalline silica, quartz powder, barite and/or talc.

For improving the handling properties of the resin compositions used in the methods according to the invention, it is further preferred that the resin composition comprise at least one agent having thixotropic properties. The presence of such a thixotropic agent may be independent of the presence or absence of fillers in the resin composition. Particularly for applications in (re)lining the use of thixotropic agents is preferred.

Additionally, in preferred embodiments of the invention, the resin composition used further comprises at least one reinforcement material. The reinforcement material may be present in the resin composition itself, but it also may be applied, in the context of the present invention, in the form of a supporting material. Often, in (re)lining applications, the resin composition is applied in the form of flexible, sleeve-shaped objects.

The supporting or reinforcing material of such flexible, sleeve-shaped objects for (re)lining is, for example, a fibrous web or needle felt of glass fibres, silica fibres, quartz fibres, carbon fibres, boron fibres, metal fibres, asbestos fibres, polyamide fibres (for example Kevlar® of Du Pont), polyester fibres, cotton fibres, silk fibres, polyethylene fibres and jute fibres. The person skilled in the art can readily determine the suitable fibres for a specific application or desired property of the structural element to be formed. Carbon fibres are for example used for applications in which a low weight and high rigidity are desirable.

It is very advantageous in the methods for (re)lining an object according to the invention that the resin composition further comprises at least one inhibitor, preferably at least one phenolic inhibitor.

Most preferably, the phenolic inhibitor is 2,6-di-tert-butyl-4-methyl phenol. To ensure stability of the resin compositions to be cured according to the invention, it is preferred that the compositions are substantially free of compounds capable of initiating the curing without being irradiated by the LED light. For instance, compounds such as peroxides should preferably be absent from the resin compositions.

The present invention also relates to the use of LED curing in applications for the lining or relining of objects, and to objects containing a cured resin composition obtained by LED curing according to the method as claimed herein. Preferably, the curable resin composition, while being cured, has a thickness in the range of from 0.5 mm to 20 cm, more preferably of from 1 mm to 5 cm.

Until now curing in (re)lining applications has usually been done by thermal curing (using either hot water or steam, and thus requiring difficult-to-handle-equipment and expensive treatments while having various other disadvantages, for instance the evolution of volatile organics during the curing process at the high temperatures reached) or by curing with UV light. In the latter case, the UV lamps used generate quite a large amount of heat, which means that in this case too, evolution of volatile organics cannot be avoided. In all of such prior art methods, moreover, due to the low curing speed only small cure depths can be reached within an acceptable time of several (e.g. about 5 to 10) minutes, and thus only relatively thin layers of (re)lining material can be applied to the inside wall of the pipes and tanks to be (re)lined. Especially when the diameter of the pipes to be (re)lined becomes larger, the need to provide the inside walls with thicker layers of laminates becomes more urgent. At a pipe diameter of 15 cm, generally a laminate layer of as much as 6 mm needs to be applied. UV curing at such diameters becomes quite tedious, and almost impossible due to the generation of heat by the lamps used. However, (re)lining applications are also becoming more and more important for larger diameter pipes, for instance for the (re)lining of sewers, etc. Such pipes can easily have diameters of up to 200 cm, and the thickness of the (re)lining laminate layers should in such cases be at least about 20 mm. For even larger diameter pipes still thicker laminates are to be applied, and curing thereof needs to be complete in order to achieve good properties of the (re)lining layer.

The present invention, therefore, provides a simple, environmentally safe and readily controllable method for (re)lining pipes, tanks and vessels, especially for such pipes and equipment having a large diameter, in particular more than 15 cm, without the aforementioned problems and without requiring big investments in equipment for the (re)lining operation.

Various (re)lining techniques are known to the person skilled in the art. Generally use is made of flexible, sleeve-shaped objects, impregnated with a curable resin composition, of such dimensions that the hollow object or system that is to be lined internally can be adequately lined therewith. This method is also known as "Schlauchrelining" in German. The flexible, sleeve-shaped objects used in (re)lining usually consist of at least one waterproof layer that is impermeable to the uncured resin (barrier layer) and a supporting or reinforcing material that is impregnated with a curable resin composition. The layer that is impermeable to the uncured resin is usually to a certain extent permeable to the solvent in which the resin composition is incorporated. The supporting material generally determines the thickness of the (re)lining. The supporting material can also ensure mechanical strength and as such - optionally in combination with any fillers present - can also function as a reinforcing material. The protective layer (barrier layer) is optionally removed after curing.

In the process of the present invention the (re)lining of tubes, tanks or vessels with the flexible, sleeve-shaped objects is preferably done as follows:

(a) the flexible, sleeve-shaped object is introduced into a tube, tank or vessel, and then
(b) is pressurized therein with a liquid or a gas, so that the flexible, sleeve-shaped object is forced against the inside of the wall of the tube, the tank or the vessel, and
(c) the curable resin composition present in the flexible, sleeve-shaped object is cured by LED curing.

In the method according to the present invention for (re)lining an object in which LED curing of a curable resin composition is applied, the distance between the LED and the top layer of the resin composition being cured is preferably in the range of from 2 mm to 30 cm, more preferably of from 2 mm to 10 cm. Of course, when larger objects are cured, or when, for instance, pipes having a diameter of more than 1 m are to be (re)lined, the distance between the LED and the top layer of the resin composition being cured may be more than 30 cm. In such cases, however, a higher energy input will be needed for the curing.

The method according to the invention very advantageously is performed with the curable resin composition, while being cured, being covered at least at its layer facing the LED by a barrier layer sheet that is impermeable to the resin composition itself and that preferably consists of a translucent material which is waterproof and permeable to volatile materials.

In (re)lining applications, the barrier layer that is impermeable to the curable resin composition and that is provided at at least one of the surfaces of the sleeve-shaped object preferably is a layer of polyethylene, polypropylene, polyamide etc. (or optionally may be a glass sheet or a polyurethane sheet) and more preferably is permeable to water vapour, etc. As mentioned above, the protective layer (barrier layer) is optionally removed after curing.

In one of the preferred embodiments of the present invention, the LED curing of the resin composition is done while controlling the intensity of LED irradiation and/or of the wavelength at which the emission maximum of the LED occurs ($\lambda_{LED}$) during the curing, preferably in combination with temperature control of the resin being cured, most preferably such temperature control being performed by non-contact temperature measurement. The intensity of LED irradiation can for instance be controlled by alternately switching the LED on and off, whereby the times "on" and "off" may be varied independently, and even per cycle. The intensity of LED irradiation can also be controlled by varying the intensity of incident light over time, or by selectively switching on and off specific parts of an LED array, for instance specific areas thereof, or individual LEDs therein having a specific wavelength at which the emission maximum occurs ($\lambda_{LED}$).

The invention will now be further illustrated by means of a series of Examples and Comparative Examples, which, however, by no means are intended to limit the scope of the invention to the embodiments shown in the Examples.

All experiments and comparative experiments in LED curing were performed using one of the following types of LEDs, as further indicated in the tables:

(A) LED 395nm (used in Comparative Examples):

Control Cure UV-LED (UV-Process Supply Inc, Chicago, USA),
arranged as an LED array with an output of 6.3 mW/cm$^2$ (output determined at a distance of 1 cm from the LED, by means of a Solatel Solascope 1 apparatus);

(B) LED 450nm (used in Examples) :

SANYO Blue Diode (Laser Components GmbH, Olching, Germany),
constructed in the form of an LED array with an output of 7 mW/cm$^2$ (output determined at a distance of 1 cm from the LED, by means of a Solatel Solascope 1 apparatus for determining the intensity up to a wavelength of 420 nm, in combination with extrapolation of the intensity for the wavelength range above 420 nm by means of Raman spectroscopy).

All experiments and comparative experiments in LED curing were performed using a standard curable resin composition (hereinafter referred to as CRC1), which was prepared as follows:

To 500 g of Synolite 1035-X-3 (an ortho-NPG resin of DSM Composite Resins, Switzerland) was added 1.5 g of Irgacure® 819 (a photoinitiator of Ciba, Switzerland). In this PIS, the highest wavelength at which an absorption

maximum occurs ($\lambda_{\text{max PIS}}$) is 400nm (shoulder). After stirring the mixture for 30 min the photoinitiator was completely dissolved, yielding CRC1.

In each curing experiment and comparative experiment, 10 g of CRC1 was poured into a glass jar, thereby creating a column of CRC of 28 mm in height. The glass jars, filled with 10 g of CRC1, then were clamped with their bottom part at 1 cm above the LED. Then the light of the LED was switched on for an uninterrupted, predetermined period and immediately after said period of irradiation, the results of curing, especially the height of the column of fully cured material (cure depth), and the height of the column of gelified material, was measured.

The results of curing with LEDs (A) and (B) are shown in Table 1, where - for convenience - all results (in mm of cure depth) are presented for various irradiation times (in seconds) as indicated:

|  | Comparative Examples | | Examples | |
|---|---|---|---|---|
|  | (A) 395 nm LED | | (B) 450 nm LED | |
| Irradiation time (sec) | Comp. Ex. No. | Cure depth (mm) | Ex. No. | Cure depth (mm) |
| 5 |  |  | 1 | 2 |
| 10 |  |  | 2 | 4 |
| 15 |  |  | 3 | 7 |
| 30 | A | 3 | 4 | 15 |
| 60 | B | 5 | 5 | 28 |
| 120 | C | 7 |  |  |
| 240 | D | 10 | 6 | 28 |
| 480 | E | 21 |  |  |

After 60 seconds of irradiation, in Example 5, the whole CRC1 contents of the glass jar had gelified into a rubbery material, the bottom part (of about 7 mm) already being fully cured and solidified. Curing, however, still was incomplete in the upper parts. Curing of the full contents of the glass jar was complete well within 240 seconds, as can be seen from the results of Example 6. The cured material from Example 6 was tested to determine the so-called Barcol hardness, both at the lower part of the CRC1 column and at its upper part. The Barcol hardness was found to be in the range of 55-60, without any significant difference between the values at the upper and the lower part.

In the Comparative Examples only the bottom part of the resin layer was cured into a hard mass, whereas the top layer remained liquid, or gelified slowly. For instance, in Comparative Example D, the bottom 10 mm was gelified, with the lowest 5 mm part being hard and solid. In Comparative Example E, the bottom 21 mm were gelified, with the lowest 10 mm part being hard and solid, and the upper layer of 7 mm still being liquid.

These Examples and Comparative Examples clearly demonstrate that curing is performed more efficiently when the LED emission spectrum does not match with the highest wavelength at which an absorption maximum occurs in the absorption spectrum for the PIS.

**Claims**

1.  Method for (re)lining an object in which Light Emitting Diode (LED) curing of a curable resin composition is applied, which resin composition contains a photoinitiating system, **characterized in that**
    the highest wavelength at which an absorption maximum of the photoinitiating system occurs ($\lambda_{\text{max PIS}}$) is at least 20 nm below, and at most 100 nm below, the wavelength at which the emission maximum of the LED occurs ($\lambda_{\text{LED}}$).

2.  Method for (re)lining an object according to claim 1, **characterized in that** $\lambda_{\text{LED}}$ is at least 420 nm.

3.  Method for (re)lining an object according to any of claims 1 or 2, **characterized in that**
    $\lambda_{\text{LED}}$ is at least 440 nm.

4.  Method for (re)lining an object according to any of claims 1 to 3, **characterized in that**
    the wavelength difference between $\lambda_{\text{LED}}$ and $\lambda_{\text{max PIS}}$ (in nm) is at least 30 nm and at most 90 nm.

**5.** Method for (re)lining an object according to claim 4, **characterized in that** the wavelength difference between $\lambda_{LED}$ and $\lambda_{max\ PIS}$ (in nm) is at least 40 nm and at most 80 nm.

**6.** Method for (re)lining an object according to claim 5, **characterized in that** the wavelength difference between $\lambda_{LED}$ and $\lambda_{max\ PIS}$ (in nm) is at least 50 nm and at most 70 nm.

**7.** Method for (re)lining an object according to any of claims 1 to 6, **characterized in that** $\lambda_{max\ PIS}$ lies in the range between 350 and 420 nm.

**8.** Method for (re)lining an object according to any of claims 1 to 7, **characterized in that** the photoinitiating system contains a Norrish Type I photoinitiating system.

**9.** Method for (re)lining an object according to claim 8, **characterized in that** the photoinitiating system is a phosphorus-containing photoinitiating system.

**10.** Method for (re)lining an object according to any of claims 1 to 9, **characterized in that** the photoinitiating system is present in the curable resin composition in an amount in the range of from 0.001 to 5 wt.%, preferably of from 0.05 to 3 wt.%, most preferably of from 0.1 to 1 wt.%.

**11.** Method for (re)lining an object according to any of claims 1 to 10, **characterized in that** the resin component of the curable resin composition is selected from the group consisting of

(a) cationically curable resin components, in particular resin components selected from the group consisting of resin components containing hydroxyl groups, epoxy groups or oxetane groups, or combinations thereof, and of vinylester resin components, and of vinylether resin components, or mixtures of any of the foregoing;
(b) radically curable resin components, in particular resin components selected from the groups consisting of

(i) homopolymerisable resin components containing one or more electron-poor reactive unsaturations; and
(ii) co-polymerisable resin components containing one or more electron-poor reactive unsaturations; and
(iii) resin components consisting at least of a component containing at least two reactive unsaturations per molecule and a component containing at least two XH groups per molecule, with XH representing a labile X-H bond and X not being O or C.

**12.** Method (re)lining an object according to claim 11, **characterized in that** the resin component of the curable resin composition has an average molecular weight in the range of from 500 to 10000 D, preferably of from 1000 to 5000 D, and most preferably of from 2500 to 4000 D.

**13.** Method for (re)lining an object according to claim 11 or 12, **characterized in that** the resin component of the curable resin composition contains one or more electron-poor reactive unsaturations.

**14.** Method for (re)lining an object according to any of claims 1 to 13, **characterized in that** the resin composition further comprises one or more fillers, the fillers preferably being selected from the groups consisting of transparent fillers and translucent fillers.

**15.** Method for (re)lining an object according to any of claims 1 to 14, **characterized in that** the resin composition further comprises an agent having thixotropic properties.

**16.** Method for (re)lining an object according to any of claims 1 to 15, **characterized in that** the resin composition further comprises at least one reinforcement material.

**17.** Method for (re)lining an object according to any of claims 1 to 16, **characterized in that** the resin composition further comprises at least one inhibitor, preferably at least one phenolic inhibitor.

**18.** Method for (re)lining an object according to any of claims 1 to 17,
**characterized in that**
the curable resin composition, when being cured, has a thickness in the range of from 0.5 mm to 20 cm, preferably of from 1 mm to 5 cm.

**19.** Method for (re)lining an object according to claim 18, **characterized in that** the distance between the LED and the top layer of the resin composition being cured is in the range of from 2 mm to 30 cm, preferably of from 2 mm to 10 cm.

**20.** Method for (re)lining an object according to claims 18 or 19, **characterized in that**
the curable resin composition, when being cured, is covered at least at its layer facing the LED by a barrier layer sheet that is impermeable to the resin composition itself and that preferably consists of a translucent material which is waterproof and permeable to volatile materials.

**21.** Method for (re)lining an object according to any of claims 18 to 20,
**characterized in that**
the LED curing of the resin composition is done while modulating the intensity of LED irradiation and/or the wavelength at which the emission maximum of the LED occurs ($\lambda_{LED}$) during the curing, preferably in combination with temperature control of the resin being cured, most preferably such temperature control being performed by non-contact temperature measurement.

**22.** Method for (re)lining an object according to any of claims 18 to 21,
**characterized in that**
the object is a pipe, tank or vessel.

**23.** Objects containing a cured resin composition obtained by LED curing according to the method of any of claims 1 to 22.

**Patentansprüche**

**1.** Verfahren zum (Wieder)auskleiden eines Objekts, bei dem Leuchtdioden(LED)-Härtung einer härtbaren Harzzusammensetzung angewendet wird, wobei die Harzzusammensetzung ein Photoinitiationssystem enthält, **dadurch gekennzeichnet, dass** die höchste Wellenlänge, bei der ein Absorptionsmaximum des Photoinitiationssystems auftritt ($\lambda_{max\,PIS}$) mindestens 20 nm unter und höchstens 100 nm unter der Wellenlänge liegt, bei der das Emissionsmaximum der LED auftritt ($\lambda_{LED}$).

**2.** Verfahren zum (Wieder)auskleiden eines Objekts nach Anspruch 1, **dadurch gekennzeichnet, dass** $\lambda_{LED}$ mindestens 420 nm beträgt.

**3.** Verfahren zum (Wieder)auskleiden eines Objekts nach einem der Ansprüche 1 oder 2, **dadurch gekennzeichnet, dass** $\lambda_{LED}$ mindestens 440 nm beträgt.

**4.** Verfahren zum (Wieder)auskleiden eines Objekts nach einem der Ansprüche 1 bis 3, **dadurch gekennzeichnet, dass** die Wellenlängendifferenz zwischen $\lambda_{LED}$ und $\lambda_{max\,PIS}$ (in nm) mindestens 30 nm und höchstens 90 nm beträgt.

**5.** Verfahren zum (Wieder)auskleiden eines Objekts nach Anspruch 4, **dadurch gekennzeichnet, dass** die Wellenlängendifferenz zwischen $\lambda_{LED}$ und $\lambda_{max\,PIS}$ (in nm) mindestens 40 nm und höchstens 80 nm beträgt.

**6.** Verfahren zum (Wieder)auskleiden eines Objekts nach Anspruch 5, **dadurch gekennzeichnet, dass** die Wellenlängendifferenz zwischen $\lambda_{LED}$ und $\lambda_{max\,PIS}$ (in nm) mindestens 50 nm und höchstens 70 nm beträgt.

**7.** Verfahren zum (Wieder)auskleiden eines Objekts nach einem der Ansprüche 1 bis 6, **dadurch gekennzeichnet, dass** $\lambda_{max\,PIS}$ im Bereich zwischen 350 420 nm liegt.

**8.** Verfahren zum (Wieder)auskleiden eines Objekts nach einem der Ansprüche 1 bis 7, **dadurch gekennzeichnet, dass** das Photoinitiationssystem ein Norrish-Typ-I-Photoinitiationssystem enthält.

**9.** Verfahren zum (Wieder)auskleiden eines Objekts nach Anspruch 8, **dadurch gekennzeichnet, dass** es sich bei dem Photoinitiationssystem um ein phosphorhaltiges Photoinitiationssystem handelt.

**10.** Verfahren zum (Wieder)auskleiden eines Objekts nach einem der Ansprüche 1 bis 9, **dadurch gekennzeichnet, dass** das Photoinitiationssystem in der härtbaren Harzzusammensetzung in einer Menge im Bereich von 0,001 bis 5 Gew.-%, vorzugsweise von 0,05 bis 3 Gew.-% und ganz besonders bevorzugt von 0,1 bis 1 Gew.-% vorliegt.

**11.** Verfahren zum (Wieder)auskleiden eines Objekts nach einem der Ansprüche 1 bis 10, **dadurch gekennzeichnet, dass** die Harzkomponente der härtbaren Harzzusammensetzung aus der Gruppe bestehend aus

(a) kationisch härtbaren Harzkomponenten, insbesondere Harzkomponenten aus der Gruppe bestehend aus Harzkomponenten mit Hydroxylgruppen, Epoxidgruppen oder Oxetangruppen oder Kombinationen davon und Vinylesterharzkomponenten und Vinyletherharzkomponenten oder Mischungen von beliebigen der oben aufgeführten Komponenten;
(b) radikalisch härtbaren Harzkomponenten, insbesondere Harzkomponenten aus den Gruppen bestehend aus

(i) homopolymerisierbaren Harzkomponenten mit einer oder mehreren elektronenarmen reaktiven Ungesättigtheiten und
(ii) copolymerisierbaren Harzkomponenten mit einer oder mehreren elektronenarmen reaktiven Ungesättigtheiten und
(iii) Harzkomponenten, bestehend aus mindestens einer Komponente mit mindestens zwei reaktiven Ungesättigtheiten pro Molekül und einer Komponente mit mindestens zwei XH-Gruppen pro Molekül, wobei XH für eine labile X-H-Bindung steht und X nicht für O oder C steht,
ausgewählt ist.

**12.** Verfahren zum (Wieder)auskleiden eines Objekts nach Anspruch 11, **dadurch gekennzeichnet, dass** die Harzkomponente der härtbaren Harzzusammensetzung ein mittleres Molekulargewicht im Bereich von 500 bis 10.000 D, vorzugsweise von 1000 bis 5000 D und ganz besonders bevorzugt von 2500 bis 4000 D aufweist.

**13.** Verfahren zum (Wieder)auskleiden eines Objekts nach Anspruch 11 oder 12, **dadurch gekennzeichnet, dass** die Harzkomponente der härtbaren Harzzusammensetzung eine oder mehrere elektronenarme reaktive Ungesättigtheiten enthält.

**14.** Verfahren zum (Wieder)auskleiden eines Objekts nach einem der Ansprüche 1 bis 13, **dadurch gekennzeichnet, dass** die Harzzusammensetzung ferner einen oder mehrere Füllstoffe umfasst, wobei die Füllstoffe vorzugsweise aus der Gruppe bestehend aus transparenten Füllstoffen und transluzenten Füllstoffen ausgewählt sind.

**15.** Verfahren zum (Wieder)auskleiden eines Objekts nach einem der Ansprüche 1 bis 14, **dadurch gekennzeichnet, dass** die Harzzusammensetzung ferner ein Mittel mit thixotropen Eigenschaften umfasst.

**16.** Verfahren zum (Wieder)auskleiden eines Objekts nach einem der Ansprüche 1 bis 15, **dadurch gekennzeichnet, dass** die Harzzusammensetzung ferner mindestens ein Verstärkungsmaterial umfasst.

**17.** Verfahren zum (Wieder)auskleiden eines Objekts nach einem der Ansprüche 1 bis 16, **dadurch gekennzeichnet, dass** die Harzzusammensetzung ferner mindestens einen Inhibitor, vorzugsweise mindestens einen phenolischen Inhibitor, umfasst.

**18.** Verfahren zum (Wieder)auskleiden eines Objekts nach einem der Ansprüche 1 bis 17, **dadurch gekennzeichnet, dass** die härtbare Harzzusammensetzung bei der Härtung eine Dicke im Bereich von 0,5 mm bis 20 cm und vorzugsweise von 1 mm bis 5 cm aufweist.

**19.** Verfahren zum (Wieder)auskleiden eines Objekts nach Anspruch 18, **dadurch gekennzeichnet, dass** der Abstand zwischen der LED und der Deckschicht der zu härtenden Harzzusammensetzung im Bereich von 2 mm bis 30 cm und vorzugsweise von 2 mm bis 10 cm liegt.

**20.** Verfahren zum (Wieder)auskleiden eines Objekts nach Anspruch 18 oder 19, **dadurch gekennzeichnet, dass** die härtbare Harzzusammensetzung bei der Härtung zumindest auf seiner der LED zugewandten Schicht durch eine Barriereschichtfolie bedeckt wird, die für die Harzzusammensetzung selbst undurchlässig ist und die vorzugsweise aus einem transluzenten Material, das wasserdicht und für flüchtige Materialien durchlässig ist, besteht.

**21.** Verfahren zum (Wieder)auskleiden eines Objekts nach einem der Ansprüche 18 bis 20, **dadurch gekennzeichnet,**

**dass** die LED-Härtung der Harzzusammensetzung unter Modulierung der Intensität der LED-Bestrahlung und/oder der Wellenlänge, bei der das Emissionsmaximum des LED ($\lambda_{LED}$) auftritt, während der Härtung, vorzugsweise in Kombination mit Temperatursteuerung des zu härtenden Harzes erfolgt, wobei eine derartige Temperatursteuerung ganz besonders bevorzugt durch kontaktlose Temperaturmessung durchgeführt wird.

22. Verfahren zum (Wieder)auskleiden eines Objekts nach einem der Ansprüche 18 bis 21, **dadurch gekennzeichnet, dass** es sich bei dem Objekt um ein Rohr, einen Tank oder ein Gefäß handelt.

23. Objekte, enthaltend eine durch LED-Härtung gemäß dem Verfahren nach einem der Ansprüche 1 bis 22 erhaltene gehärtete Harzzusammensetzung.


**Revendications**

1. Procédé de (re)garnissage d'un objet dans lequel un durcissement par diode électroluminescente (DEL) d'une composition de résine durcissable est appliqué, laquelle composition de résine contient un système photoinitiateur, **caractérisé en ce que**
   la plus grande longueur d'onde à laquelle apparaît un maximum d'absorption du système photoinitiateur ($\lambda_{max\ SPI}$) est inférieure d'au moins 20 nm, et inférieure d'au plus 100 nm, à la longueur d'onde à laquelle apparaît le maximum d'émission de la DEL ($\lambda_{DEL}$).

2. Procédé de (re)garnissage d'un objet selon la revendication 1, **caractérisé en ce que** $\lambda_{DEL}$ vaut au moins 420 nm.

3. Procédé de (re)garnissage d'un objet selon l'une quelconque des revendications 1 et 2, **caractérisé en ce que** $\lambda_{DEL}$ vaut au moins 440 nm.

4. Procédé de (re)garnissage d'un objet selon l'une quelconque des revendications 1 à 3, **caractérisé en ce que** la différence de longueur d'onde entre $\lambda_{DEL}$ et $\lambda_{max\ SPI}$ (en nm) est au moins de 30 nm et au plus de 90 nm.

5. Procédé de (re)garnissage d'un objet selon la revendication 4, **caractérisé en ce que** la différence de longueur d'onde entre $\lambda_{DEL}$ et $\lambda_{max\ SPI}$ (en nm) est au moins de 40 nm et au plus de 80 nm.

6. Procédé de (re)garnissage d'un objet selon la revendication 5, **caractérisé en ce que** la différence de longueur d'onde entre $\lambda_{DEL}$ et $\lambda_{max\ SPI}$ (en nm) est au moins de 50 nm et au plus de 70 nm.

7. Procédé de (re)garnissage d'un objet selon l'une quelconque des revendications 1 à 6, **caractérisé en ce que** $\lambda_{max\ SPI}$ se situe dans la gamme entre 350 et 420 nm.

8. Procédé de (re)garnissage d'un objet selon l'une quelconque des revendications 1 à 7, **caractérisé en ce que** le système photoinitiateur contient un système photoinitiateur de Norrish de type I.

9. Procédé de (re)garnissage d'un objet selon la revendication 8, **caractérisé en ce que** le système photoinitiateur est un système photoinitiateur contenant du phosphore.

10. Procédé de (re)garnissage d'un objet selon l'une quelconque des revendications 1 à 9, **caractérisé en ce que** le système photoinitiateur est présent dans la composition de résine durcissable dans une quantité dans la gamme de 0,001 à 5 % en poids, de préférence de 0,05 à 3 % en poids, idéalement de 0,1 à 1 % en poids.

11. Procédé de (re)garnissage d'un objet selon l'une quelconque des revendications 1 à 10, **caractérisé en ce que** le composant résineux de la composition de résine durcissable est choisi dans le groupe constitué par

   (a) les composants résineux durcissables par voie cationique, en particulier les composants résineux choisis dans le groupe constitué par les composants résineux contenant des groupes hydroxyle, des groupes époxy ou des groupes oxétane, ou les combinaisons de ceux-ci, et par les composants résineux d'ester vinylique, et par les composants résineux d'éther vinylique, ou les mélanges de n'importe lesquels d'entre eux ;
   (b) les composants résineux durcissables par voie radicalaire, en particulier les composants résineux choisis dans les groupes constitués par

(i) les composants résineux homopolymérisables contenant une ou plusieurs insaturations réactives pauvres en électrons ; et

(ii) les composants résineux copolymérisables contenant une ou plusieurs insaturations réactives pauvres en électrons ; et

(iii) les composants résineux constitués d'au moins un composant contenant au moins deux insaturations réactives par molécule et d'un composant contenant au moins deux groupes XH par molécule, XH représentant une liaison X-H labile et X n'étant ni O, ni C.

12. Procédé de (re)garnissage d'un objet selon la revendication 11, **caractérisé en ce que**
le composant résineux de la composition de résine durcissable a un poids moléculaire moyen dans la gamme de 500 à 10 000 D, de préférence de 1000 à 5000 D, et idéalement de 2500 à 4000 D.

13. Procédé de (re)garnissage d'un objet selon la revendication 11 ou 12, **caractérisé en ce que**
le composant résineux de la composition de résine durcissable contient une ou plusieurs insaturations réactives pauvres en électrons.

14. Procédé de (re)garnissage d'un objet selon l'une quelconque des revendications 1 à 13, **caractérisé en ce que**
la composition de résine comprend en outre une ou plusieurs charges, les charges étant de préférence choisies dans les groupes constitués par les charges transparentes et les charges translucides.

15. Procédé de (re)garnissage d'un objet selon l'une quelconque des revendications 1 à 14, **caractérisé en ce que**
la composition de résine comprend en outre un agent ayant des propriétés thixotropes.

16. Procédé de (re)garnissage d'un objet selon l'une quelconque des revendications 1 à 15, **caractérisé en ce que**
la composition de résine comprend en outre au moins un matériau de renforcement.

17. Procédé de (re)garnissage d'un objet selon l'une quelconque des revendications 1 à 16, **caractérisé en ce que**
la composition de résine comprend en outre au moins un inhibiteur, de préférence au moins un inhibiteur phénolique.

18. Procédé de (re)garnissage d'un objet selon l'une quelconque des revendications 1 à 17, **caractérisé en ce que**
la composition de résine durcissable, une fois durcie, a une épaisseur dans la gamme de 0,5 mm à 20 cm, de préférence de 1 mm à 5 cm.

19. Procédé de (re)garnissage d'un objet selon la revendication 18, **caractérisé en ce que**
la distance entre la DEL et la couche supérieure de la composition de résine durcie se situe dans la gamme de 2 mm à 30 cm, de préférence de 2 mm à 10 cm.

20. Procédé de (re)garnissage d'un objet selon les revendications 18 et 19, **caractérisé en ce que**
la composition de résine durcissable, une fois durcie, est recouverte au moins sur sa couche faisant face à la DEL d'une feuille de couche barrière qui est imperméable à la composition de résine elle-même et qui consiste de préférence en un matériau translucide qui est étanche à l'eau et perméable aux matières volatiles.

21. Procédé de (re)garnissage d'un objet selon l'une quelconque des revendications 18 à 20, **caractérisé en ce que**
le durcissement par DEL de la composition de résine est effectué tout en modulant l'intensité de l'irradiation de la DEL et/ou la longueur d'onde à laquelle apparaît le maximum d'émission de la DEL ($\lambda_{DEL}$) pendant le durcissement, de préférence en combinaison avec la régulation de la température de la résine durcie, une telle régulation de température étant idéalement effectuée par mesure de température sans contact.

22. Procédé de (re)garnissage d'un objet selon l'une quelconque des revendications 18 à 21, **caractérisé en ce que**
l'objet est un tuyau, un réservoir ou une cuve.

23. Objets contenant une composition de résine durcie obtenue par durcissement par DEL selon le procédé de l'une quelconque des revendications 1 à 22.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200381430 B
- NL 1007205
- WO 0007746 A
- WO 88020902 A
- EP 0156493 A
- US 3297745 A
- US 3772404 A
- US 4618658 A
- GB 2217722 A
- DE 3744390 A
- EP 534197 A


**Non-patent literature cited in the description**

- **K. DAKE et al.** LED Curing versus Conventional UV Curing Systems: Property Comparisons of Acrylates and Epoxies. *Conference proceedings,* 135-140
- **S. B. SIEGEL.** The UV LED Curing - Advances in a New Technology. *Conference proceedings,* 149-157
- **N. B. CRAMER et al.** *Macromol.,* 2003, vol. 36, 7964-7969
- **K. DIETLIKER ; J. V. CRIVELLO.** Chemistry and Technology of UV and EB Formulations. SITA Technology, 1998, vol. 3
- Kunststoff-Handbuch band VIII: Polyester. Vieweg und Goerden, 1973